Europäisches Patentamt

European Patent Office

Office européen des brevets

(11) Publication number: **0 402 297**
**A2**

## (12) EUROPEAN PATENT APPLICATION

(21) Application number: **90500050.1**

(22) Date of filing: **25.05.90**

(51) Int. Cl.⁵: **B28D 1/04, B23D 59/02,**
**B23D 47/00**

(30) Priority: **09.06.89 ES 8902017**

(43) Date of publication of application:
**12.12.90 Bulletin 90/50**

(84) Designated Contracting States:
**AT BE CH DE DK FR GB GR IT LI LU NL SE**

(71) Applicant: **GERMANS BOADA, S.A.**
**Pol. Can Rosés., Av. Olimpiades, s/n**

**E-08191 Rubi(ES)**

(72) Inventor: **Boada Sucarrats, Joan**
**Cami de la Font de la Tartana 33**
**E-08230 Matadepera, Barcelona(ES)**

(74) Representative: **Ponti Sales, Adelaida**
**Paseo de Gracia, 33**
**E-08007 Barcelona(ES)**

(54) **Parting-off machine for cutting of flat construction pieces.**

(57) Comprises a motor assembly (9), cutting disc (4), working table (2,3), and a frame (1) and liquid-cooled cutting edge, in which the motor assembly (9) is mounted floating under the work table (2), enclosed in a protective casing (12), and the coolant liquid deposit is in the form of a tray (8), in which rests the frame (1), which presents pairs of protruding lugs to fix the frame in opposite positions, and an overflow (17) to fix the level of the liquid.

The work table extends into a jointed wing (3), beside which protrudes the cutting disc (4), the wing being fitted with a diagonal bracing strut (18) with means of fixing the angular position and with a notch (21) to automatically fix the horizontal position. The guard (5) of the disc (4) is mounted swivelling and sliding on an upper projecting arm (22), with set-screws or similar.

FIG. 2

# PARTING-OFF MACHINE FOR CUTTING OF FLAT CONSTRUCTION PIECES

The present invention relates to a parting-off machine for cutting of flat construction pieces such as tiles, terrazzos, flagstones and similar.

## BACKGROUND or THE INVENTION

Various types of parting-off machines equipped with cutting disc and devoted to the cutting of flat pieces are already well known on the market.

In this respect, for example, the very firm which is holder of the present is also concessionaire of prior spanish patent No. 554015 which have a motor assembly with coupled tank containing cutting edge coolant water. The motor assembly operates a disc which projects through a groove in the machine work table, which is arranged inclined and is fitted with guide rule for pieces to be cut, whose position is adjustable and fixed at will.

The motor assembly which operates the cutting disc is mounted oscillating, beside the water tank, in such a way that with respect to the support surface of the work table the disc adopts the appropriate inclination for the vertical cut or cut into the angle of the piece, for the formation of mitred joints, for example.

This construction, which has been shown to provide excellent results, nevertheless suffers from one disadvantage, deriving from the complexity thereof, so that this construction is only suitable for "industrial" type machines which, in general, do not need to be moved frequently, for this machine is quite heavy overall.

This disadvantage further results in a relatively high cost price, making it inappropriate for smaller-scale economies, such as the case of a private individual, for do-it-yourself work, or for small industries which need to move the machine fairly frequently.

## DESCRIPTION OF THE INVENTION

The machine object of the invention was made and conceived using the criterion of the greatest simplicity, so that, although robust and of light weight, it effectively fulfils its task, permitting continuous and efficient work, even when applied under demanding conditions.

The machine in question, which includes a motor assembly, with cutting disc, work table, assembled on an appropriate frame from which there emerges the working edge of said disc and cooling of the cut by water or appropriate coolant, is essentially characterized by the fact that the motor assembly is mounted statically beneath the work table, fitted floating with respect to the table, with elastic anti-vibration dampers, and fitted with a protective casing which forms part of the table itself.

Beneath the table, the lower edge of the cutting disc dips into the water contained in a tray on which there rests the frame of the work table, with projecting stops for location of said frame, being fitted with lateral disc guard to prevent splashing of water during work.

In order to facilitate cutting of pieces at an angle, the work table is formed of two parts, one fixed to the table, which reaches from one end to the disc operating zone, and another jointed part from that zone which can be set to any angular position between horizontal and 45° with respect to the first fixed part.

In accordance with an advantageous embodiment of the invention, the jointed part of the table is secured by two arms in the form of articulated diagonal braces which can be fixed in corresponding position by means of a bolt or similar, there being arranged to those arms notches which permit automatic fixing of the normal horizontal working position on the same plane as the fixed part of the table.

Another detail of the invention lies in the layout of the frame location stops on support tray for same, comprising a pair of lugs set at suitable distance apart from each other and from the edges of the tray to allow movement and fixing of the frame towards one side or the other in a reversible manner.

The tray has an overflow on its side to fix maximum level of the water to serve as cutting disc coolant.

The articulated part of the table has a support rule for pieces to be cut, fitted in conventional sliding manner as described in above-mentioned invention patent No 545015 with the disc similarly covered to the above by a guard, joint fitted on a lateral fixed arm of the table, with oblong sliding opening of the articulation spindle to allow vertical positioning of the guard where felt to be advisable.

## BRIEF DESCRIPTION OF THE DRAWINGS

For a better understanding of what has been expounded, drawings have been attached which schematically and solely by way of example, without restrictive nature of any sort, represent a practical example of a machine of the characteristics indicated.

In those drawings, figure 1 is a perspective view of the machine as a whole; figure 2 corresponds to a longitudinal section of same; figure 3 is a transversal section, viewed from behind the drive motor; figure 4 provides another longitudinal section view, this time on a larger scale, of the layout of the motor assembly; figures 5 and 6 similarly show in detail and on a larger scale the articulation of the mobile part of the work table.

## DESCRIPTION OF A PREFERRED EMBODIMENT

As can be observed from the above-mentioned drawings, the machine includes a frame (1) upon which rests the work table formed of two parts, one fixed (2) and the other hinged (3), between which projects the upper edge of the cutting disc (4) with guard (5). The articulated part (3) of the work table has fitted to it a support rule for the piece to be cut, fitted on sliding lateral arms (7) in a manner already known. The frame (1) is fitted inside a tray (8), which in turn serves as coolant water container for the cutting disc (4).

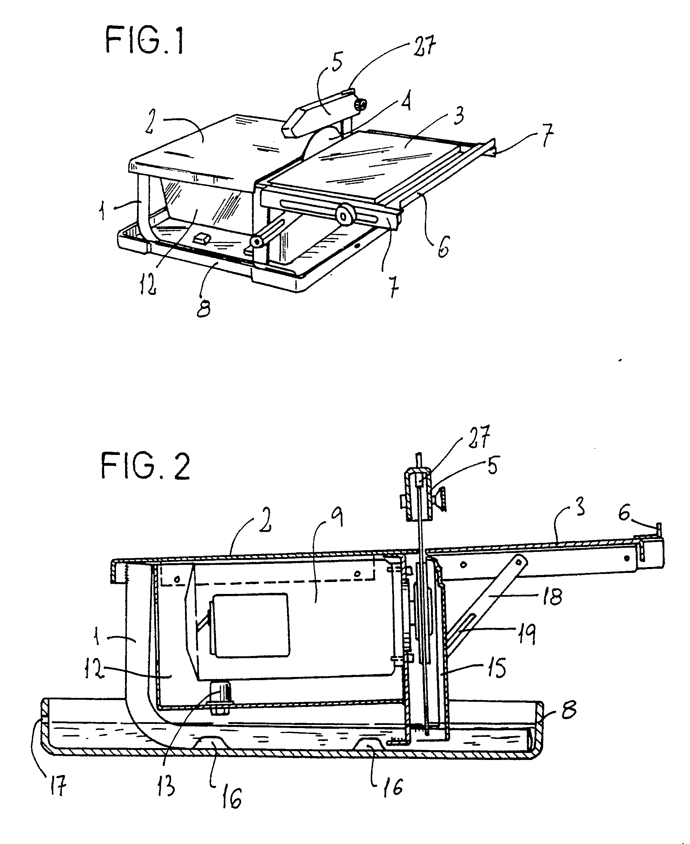

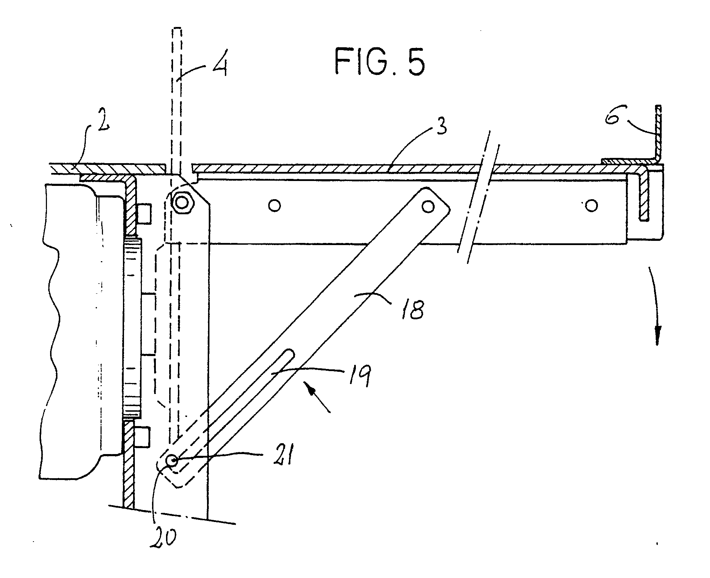

As can be observed from figures 2 and 4, the motor (9) is mounted floating, secured by bolts (10) to a transversal partition (11), joined above to lower side of the fixed part (2) of the work table and, beneath, to the actual frame (1) of the machine. The motor (9) is also enclosed within a casing (12) which presents to the interior some elastic dampers (13), on which the motor (9) housing rests, in such a way as to absorb any vibrations which might arise during operation. The casing is in its turn secured to the respective wings (14), likewise attached to the lower side of the fixed part (2) of the table.

The lower edge of the cutting disc (4) is submerged in the water contained in the tray (8) and is flanked by a guard plate (15) which prevents the splashing of water to the exterior.

This same tray (8) has two pairs of projecting lugs (16), spaced at a distance from each other and from the edges of the tray such that they permit the position of the the frame (1) inside said tray (8) to be reversed. The tray (8) - which as has been indicated serves as a container for the cutting coolant water - has an overflow element (17) which fixes the maximum level of liquid it can contain.

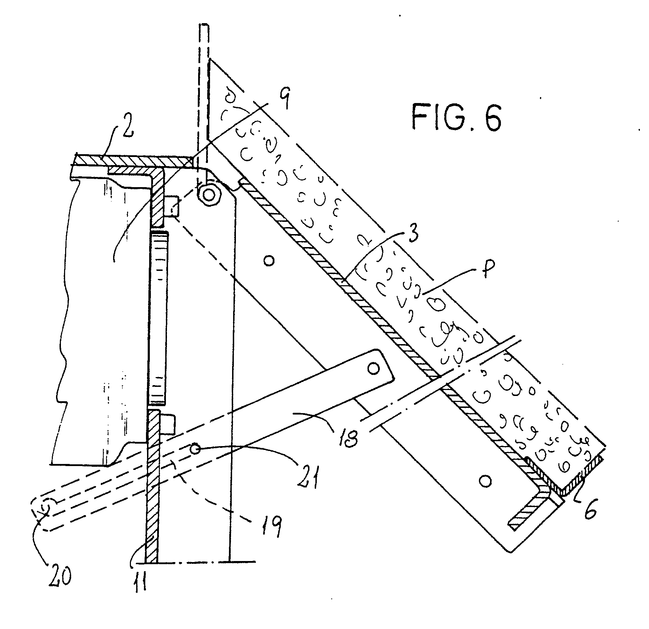

As can be observed in figures 5 and 6, the oscillating articulated part (3) of the work table, on which the piece to be cut P is situated, has two stop positions, one horizontal (figure 5), on the same plane as the fixed part (2), and the other at 45⁰ with respect to the first (figure 6), which permits cutting of pieces directly to mitre for joining of both at right angles. The part (3) is nevertheless linked to the lateral diagonal braces (18), equipped with oblong openings (19) and having their respective end notches (20). The spindles of the setscrews (21), fitted to the fixed part (2) of the machine table and allowing setting of various angle positions of the swivelling part (3), work with these openings and lugs to form mitres of various angles. The notches (20) can in any case set the horizontal position automatically, when the shanks of the setscrews (21) pass into them.

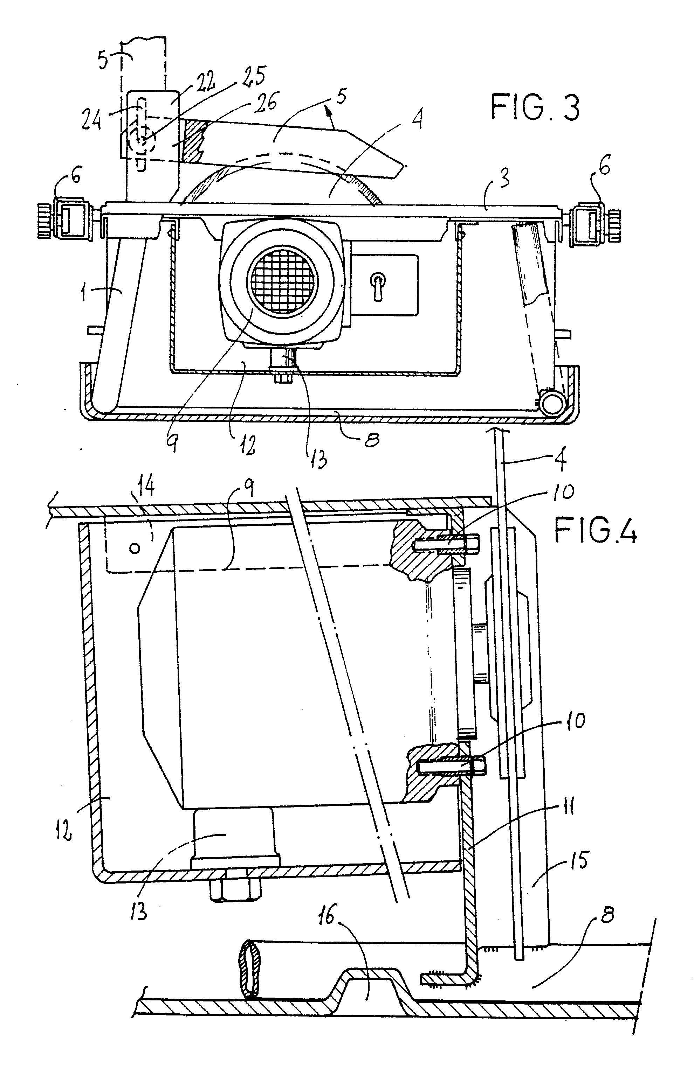

Figure 3 shows assembly of the cutting disc (4) protective guard (5) by means of the vertical arm (22) which projects from the surface of the work table and which has an oblong slot (24) in which the shank of a setscrew (25) can slide. The guard has a notch (26) permitting it to be set in vertical position, as shown by the dotted line.

It is not difficult to deduce the advantages offered by a machine of the characteristics described:
- on the one hand, simplicity of construction puts it within reach of a larger number of users, even at household or private level, for do-it-yourself jobs;
- and on the other hand, the very simplicity of the machine means that it is especially light and transportable, thus providing the abundant use potential outlined above.

## Claims

1. Parting-off machine for cutting of flat construction pieces, including a motor assembly (9), with cutting disc (4), work table (2,3) fitted on a frame (1) and from which there emerges the working edge of the cutting disc (4), with cooling of the cut by water or appropriate coolant fluid, characterized essentially by the fact that the motor assembly (9) is mounted floating beneath the work table and surrounded by a protective casing (12) forming part of the table, on which are fitted elastic dampeners (13) supporting the free end of the motor to absorb vibrations, the coolant water deposit or container comprising a tray (8) in which the table support frame (1) is in turn attached and fixed, in such a way that the lower edge of the cutting disc (4) is submerged in the water contained in that tray (8).

2. Parting-off machine, according to the previous claim, characterized by the fact that the motor (9) is secured at one of its ends onto a partition element (11) forming part of the machine work table and of the frame (1) of same, this partition element being outside the protective casing (12), with the cutting disc (4) being coupled to the motor shaft to the outside of the partition element and being flanked by a guard (15) to avoid splashing to exterior.

3. Parting-off machine, according to claims 1 and 2, characterized by the fact that the tray (8) for holding the cut coolant water has projecting parts to the interior, two pairs of lugs (16), set apart from each other and from the edges of the tray (8) at a distance such as to allow the position of the machine frame to be reversed, while the tray (8) has an overflow (17) to fix the maximum level of the water which can be contained within it.

4. Parting-off machine, according to claims 1 to 3, characterized by the fact that the work tray of the machine is formed by two complementary parts, one fixed (2) and the other (3) articulated to swivel, coming together at the zone where the cutting disc (4) emerges, the first of these parts being horizontal and the other being able to adopt various angle positions for mitre cutting of piece edges at different angles, the part (3) being fitted with diagonal braces (18) with elements for fixing said angle positions.

5. Parting-off machine, according to claims 1 to 4, characterized by the fact that the diagonal braces (18) for fixing of work table angle positions comprise arms situated to the sides of the table and equipped with long slots (19) which slide along the shanks (21) of setscrews or similar, the slots being provided with notches (20) at one of their ends for automatic snapping-in of the setscrew shanks (21) when the articulated part of the table reaches the horizontal position, in the same plane as the fixed part.

6. Parting-off machine, according to claims 1 to 5, characterized by the fact that the cutting disc guard (5) is fitted at the end of a support arm (22) which emerges from the surface of the machine and which has a long slot (24) into which the shank (25) of a fixing screw is introduced, with the guard itself having a groove (27) which allows it to be located and slid in vertical position.

EP 0 402 297 A2

FIG.1

FIG. 2

FIG. 3

FIG.4

FIG. 5

FIG. 6